# EUROPEAN PATENT SPECIFICATION

(11) **EP 1 477 389 B1**
(45) Date of publication and mention of the grant of the patent: **02.07.2014**
(21) Application number: 04010471.3
(22) Date of filing: 03.05.2004
(51) Int. Cl.: B62D 15/02, G01B 21/22

(54) **Apparatus and method for detecting rotational angle**
Drehwinkelsensor und Verfahren zur Ermittlung eines Drehwinkels
Capteur et méthode de mesure d'un angle de rotation

(30) Priority: 14.05.2003 JP 2003136077
(43) Date of publication of application: 17.11.2004
(73) Proprietor: ALPS ELECTRIC CO., LTD., Tokyo 145-8501 (JP)
(72) Inventor: Okumura, Hirofumi, Ota-ku Tokyo 145-8501 (JP)
(74) Representative: Klunker . Schmitt-Nilson . Hirsch

(56) References cited:
- AU-B2- 752 711
- DE-A1- 19 820 014
- FR-A- 2 697 081
- US-A1- 2004 078 166
- US-B1- 6 466 889

## Description

### BACKGROUND OF THE INVENTION

### 1. Field of the Invention

The present invention relates to an apparatus and a method for detecting a rotational angle of a steering wheel of a vehicle as an absolute angle.

### 2. Description of the Related Art

Position control for the vehicle is performed during driving to improve the operability of a vehicle such as an automobile. In particular, when the vehicle turns a corner, load applied to the body of the vehicle becomes changed with road conditions, speed, steering angle, or the like, so that the position of the body is stabilized by detecting, for example, the steering angle, and then by applying the moment corresponding to the steering angle to the body. In this case, for more precise control, the absolute angle of the steering wheel needs to be detected, which has lead to proposal for a various apparatuses for detecting the rotational angle (See PCT Japanese Translation Patent Publication Nos. 2001-505667 and 2002-531858, and Fig. 1 thereof, respectively).

The apparatus for detecting the rotational angle comprises a first rotational body, for example, a steering wheel, connected to a rotational axis, and a plurality of other rotational bodies that are teeth-engaged with the first rotational body to rotate all together. In accordance with this apparatus, values of rotational angle output from each of the plurality of other rotational bodies may be combined to thereby detect the absolute angle of the first rotational body.

However, when the rotational angle is detected by a conventional apparatus for detecting the rotational angle, the number of teeth of the first rotational body and the plurality of other rotational bodies are different from one another, which causes the combination of teeth to be significantly limited, and the degree of design freedom to be reduced even when the number of rotation of the rotational axis or the measurement accuracy of the rotational angle is adjusted. Furthermore, a plurality of rotational bodies with different numbers of teeth from one another are placed, which causes the number of components to be increased.

FR-A-2 697 081 discloses an apparatus for detecting a rotational angle of a rotatable rotor as an absolute angle, wherein two transmission gears are respectively coupled to a first and a second output gear, wherein the first and second output gears have slightly different teeth numbers. A coding device is coupled to each of the first and second output gears in order to obtain as an absolute position value the product of the teeth number of the first and second output gear.

DE-A-198 20 014 discloses a multiturn rotary encoder for detecting a rotational angle of a rotatable rotor. A sensor is associated to the rotor and two additional encoders are coupled to the axis of the rotor. Between the rotor and the first additional sensor and between the two additional sensors, respective reduction gears are provided.

### SUMMARY OF THE INVENTION

The present invention is directed to an apparatus and a method for detecting the rotational angle, which may accurately detect the absolute angle of the rotational axis, and at the same time may have a high degree of design freedom to cope with changes of the rotational axis, the number of rotation of the rotational axis, or the measurement accuracy.

One aspect of the present invention is to provide an apparatus for detecting a rotational angle of a rotatable rotor as an absolute angle, which comprises the features of claim 1.

Another aspect of the present invention is to provide a method for detecting a rotational angle of a rotatable rotor as an absolute angle, which comprises the steps defined by claim 3.

In accordance with the apparatus and the method for detecting the rotational angle, the first output gear and the second output gear rotate with a different rotation number from each other while the rotor rotates. As a result, there exists difference between the first angle signal and the second angle signal to be output which also have a different values from each other due to the absolute angle of the rotor. Thus, even when the rotor, the first output gear, and the second output gear all rotate together, at least one of the first angle signal and the second angle signal is set to be a reference value for detecting angle and to be corresponded to the difference value, which allows the absolute angle of the rotor to be detected with high accuracy.

Alternatively, the combination of the number of teeth of the first transmission gear, the second transmission gear, the first output gear, and the second output gear may be adjusted more than that of the related art.

In accordance with the apparatus and method for detecting the rotational angle, the first output gear rotates N x n times and the second output gear rotates N x n -1 times while the rotor rotates N times regardless of the value of m. Thus, rotation of the rotor causes the first output gear and the second output gear to have a deviation of the rotational angle between them, which becomes up to the value of one rotation when the rotor rotates N times. This deviation becomes a different value by the absolute angle of the rotor, so that the absolute angle of the rotor may be detected by corresponding to at least one of the first angle signal and the second angle signal.

In addition, the size of the first and the second output gears may be readily set by selecting the value of m, when they are adjusted to teeth mold adapted to the outer diameter and the total rotation number of the rotor.

Furthermore, the number of teeth of the first output gear and the second output gear has the same number as m × N, so that the same components may be used for both of them.

The rotor is connected to the rotational axis of the steering wheel of a vehicle in accordance with the apparatus for detecting the rotational angle of the present invention.

Since this apparatus is connected to the rotational axis of the steering wheel of the vehicle, the absolute angle of the steering angle of the vehicle such as an automobile may be detected with high accuracy.

### BRIEF DESCRIPTION OF THE DRAWINGS

Fig. 1 is a plan view for showing the apparatus for detecting a rotational angle in accordance with one embodiment of the present invention.
Fig. 2 shows a cross sectional view taken along the II-II line of Fig. 1.
Fig. 3 is a graph showing the relationship between an absolute angle of a rotor and the output of each angle signal in the apparatus for detecting the rotational angle in accordance with one embodiment of the present invention.
Fig. 4 is a flowchart showing a processing flow of a method for detecting the rotational angle in accordance with one embodiment of the present invention.
Fig. 5 is a graph showing the relationship between the absolute angle of the rotor and the output of each angle signal in the apparatus for detecting the rotational angle with a gear ratio of 3 in accordance with one embodiment of the present invention.

### DETAILED DESCRIPTION OF PREFERRED EMBODIMENTS

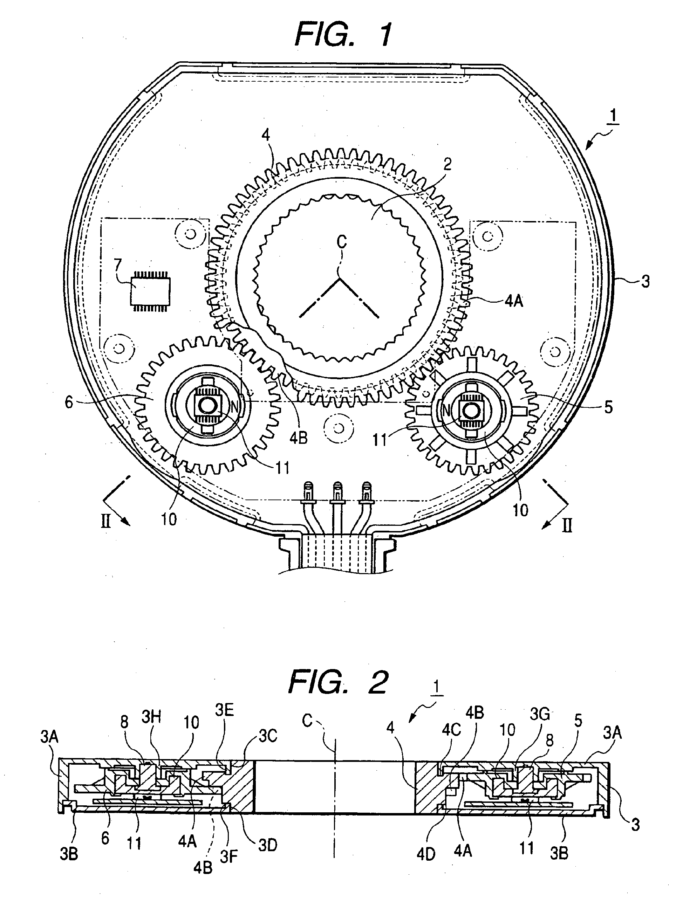

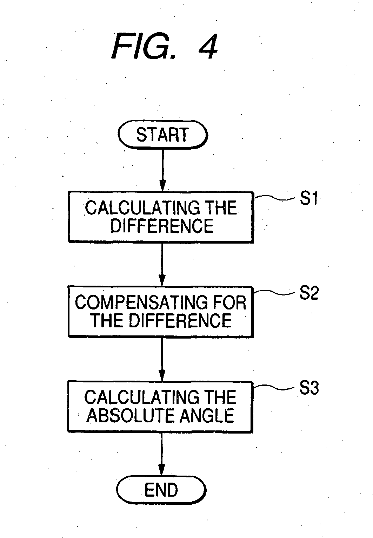

Hereinafter, one embodiment of the present invention will be described with reference to Fig. 1 to Fig. 4.

An apparatus for detecting the rotational angle in accordance with one embodiment of the present invention detects an absolute angle of a steering angle of a steering wheel, which is connected to a rotational axis member 2 of a steering wheel in a vehicle such as an automobile. This apparatus 1 for detecting the rotational angle, as shown in Fig. 1 and Fig. 2, comprises a body 3, a rotor 4 connected to the rotational axis member 2 to be rotated, a first output gear 5 rotated by the rotation of the rotor 4, a second output gear 6 rotated by the rotation of the rotor 4, and an exemplary microprocessor 7 for calculating the rotational angle of the rotor 4.

The body 3 comprises a substrate 3A, and a cover 3B shaped to cover the substrate as shown in Fig.2, and holes 3C and 3D are formed at centers of the substrate 3A and the cover 3B, respectively.

Circular shaped bearing protrusions 3E and 3F are formed on the inner periphery portions of the hole 3C and 3D, respectively.

The rotor 4 is, for example, made of resin such as polyacetal, and the first transmission gear 4A and the second transmission gear 4B are formed along the rotational axis C at its outer peripheral portion as shown in Fig. 2, which have different pitch circles from each other.

A peripheral recess 4C that is formed where the first transmission gear 4A engages with the bearing protrusion 3E, and a peripheral recess 4D that is formed where the second transmission gear 4B engages with the bearing protrusion 3F, which allows the rotor 4 to be rotatably supported between the substrate 3A and the cover 3B.

The number of teeth of the first transmission gear 4A is m times N × n where the N is the number of maximum rotation of the rotor 4 and n is a gear ratio of the first transmission gear 4A and the first output gear 5, which are all integers.

In the present embodiment, while the rotor 4 rotates, for example, two times clockwise/counterclockwise, the absolute angle is detected to have N of 4 and the gear ratio of the first transmission gear 4A and the first output gear 5 is 2 and m is 8, so that the number of teeth becomes 64 (which is 8 × (4 × 2)).

In addition, the number of teeth of the second transmission gear 4B is m times (N × n-1) (m is integer). In the present invention, the number is 56 (which is 8 times (4 × 2 - 1)).

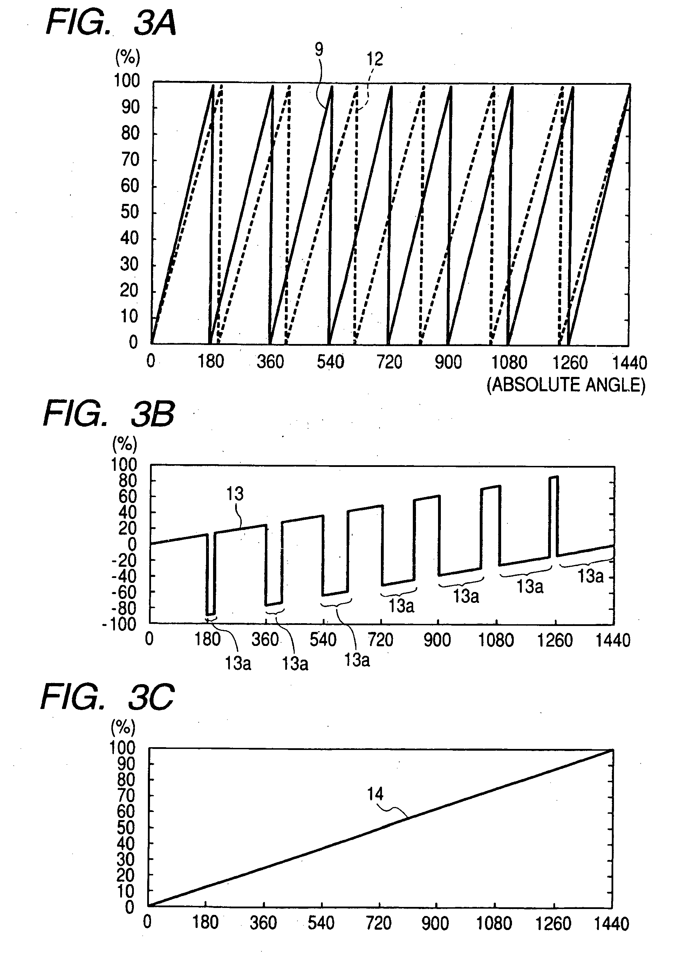

The first output gear 5 is, for example, made of resin such as polyacetal, and rotatably teeth-engages with the first transmission gear 4A at the gear axis member 8 rotatably supported by a bearing 3G formed in some part of the inner surface of the substrate 3A of the body 3, and outputs a first angle signal 9 in response to the rotation as shown in Fig. 3A.

When the first transmission gear 4A has the above mentioned configuration, the first output gear 5 have the number of teeth equal to N times the number of teeth difference between the first transmission gear 4A and the second transmission gear 4B.

In the present embodiment, N is 4 and the number of teeth difference is 8 (which is 64 - 56), so that the number of teeth of the first output gear 5 is 32 (which is 4 × 8).

A circular magnet 10, and a Giant Magneto-Resistive (GMR) sensor 11 at the center of the circular magnet 10 for detecting the change in magnetic field are located in the first output gear 5. The GMR sensor 11 converts the change in magnetic field to a change in voltage value to be output, and when the magnet 10 rotates together with the first output gear 5 to periodically change the magnetic field, the voltage value to be output is also periodically changed. In this case, when the first output gear 5 rotates first one time as shown in Fig. 3, the output gear 5 outputs the first angle signal 9, which has been linearly converted from the angle change of 0° to 360° to an angle ratio of 0% to 100%. When the first output gear 5 rotates the second time, the output value discontinuously returns to 0%, which leads to be linearly increased by the rotation. By detecting this angle ratio, the absolute angle of one rotation varying from 0° to 360° may be repeatedly detected. In the present embodiment, the first angle signal 9 is a reference value for the angle detection.

The second output gear 6 is made of the same material as the first output gear 5, and rotatably teeth-engages with the second transmission gear 4B at the gear axis member 8 rotatably supported by a bearing 3H formed in some portion of the inner surface of the substrate 3A of the body 3, and outputs a second angle signal 12 in responsive to the rotation.

When the second transmission gear 4B has the above-mentioned configuration, the number of teeth of the second output gear 6 is obtained by the same equation as the first output gear 5, which is 32 in this embodiment.

A circular magnet 10, and a GMR sensor 11 at the center of the circular magnet 10 are also formed in the second output gear 6. The GMR sensor 11 outputs the second angle signal 12 similarly to the first angle signal 9.

The combination of each of the teeth of the first transmission gear 4A, the second transmission gear 4B, the first output gear 5, and the second output gear 6 may have any patterns of the patterns disclosed in table 1.

**[Table 1]**

| Teeth Pattern (gear ratio = 2) | | | |
|---|---|---|---|
| Teeth number of the first transmission gear 4A | Teeth number of the second transmission gear 4B | Teeth difference | Teeth number of the first and second output gears 5 and 6 |
| 72 | 63 | 9 | 36 |
| 64 | 56 | 8 | 32 |
| 56 | 49 | 7 | 28 |
| 48 | 42 | 6 | 24 |
| 40 | 35 | 5 | 20 |
| 32 | 28 | 4 | 16 |
| 24 | 21 | 3 | 12 |
| 16 | 14 | 2 | 8 |
| 8 | 7 | 1 | 4 |

The microprocessor 7 detects the first angle signal 9 and the second signal 12, and processes the operation for calculating the absolute angle of the rotor 4.

This operation process comprises a first step of detecting the first angle signal 9 and the second angle signal 12 to calculate the difference between them (S1), a second step of compensating for the difference (S2), and a third step of calculating the absolute angle of the rotor 4 (S3).

Rotation of the rotor 4 allows the first output gear 5 and the second output gear 5 to rotate with different rotation number from each other, which results in a deviation from the value of the rotational angle to thereby have the difference between the first angle signal 9 and the second angle signal 12.

Thus, the first step S1 calculates the difference obtained from the output value of the first angle signal 9 subtracted by the output value of the second angle signal 12 as shown in Fig. 3B. This difference 13 varies based on the absolute angle of the rotor 4. When the rotor 4 rotates four times, the first output gear 5 and the second output gear 6 have the rotational angle difference of one rotation, so that the difference 13 becomes zero again.

The second step S2 calculates the compensation value 14 by adding the voltage value of 100% to the difference when the difference 13 has a negative value as shown in Fig. 3C. This compensation value 14 corresponds to the whole range of the absolute angle to be detected in a one-to-one manner, so that it has the value linearly varying from 0% to 100%.

The third step S3 determines the actual angle range of the absolute angle of the rotor 4 by corresponding the calculated compensation value to the relationship between the compensation value and the absolute angle of the rotor 4 that have been obtained in advance, and calculates the actual absolute angle from the first angle signal 9 obtained by the third step.

Hereinafter, a method for detecting a rotational angle by the apparatus for detecting the rotational angle 1 will be described in accordance with the embodiment of the present invention.

When a driver rotates a steering wheel of an automobile (not shown), the rotational axis member 2 and the rotor 4 rotate together with the steering wheel. In this case, the first output gear 5 rotates in a direction opposite to the rotor 4 through the first transmission gear 4A, and the second output gear 6 rotates in the same direction as the first output gear 5 through the second the transmission gear 4B. Since the gear ratio of the first transmission gear 4A and the first output gear 5 is 2, the first output gear 5 rotates two times while the rotor 4 does one time.

The first output gear 5 rotates one time whenever the rotor 4 rotates by 180°. Thus, the first angle signal 9 during the period is output as sawtooth waves varying from 0% to 100%. The first output gear 5 rotates eight times while the rotor 4 does four times to allow the absolute angle to vary from 0° to 1440°, so that the sawtooth wave has eight periods in total as shown in Fig. 3A.

In the meantime, the second angle signal 12 has the same sawtooth wave. The second output gear 6 rotates seven times while the rotor 4 does four times, so that the sawtooth wave has seven periods in total as shown in Fig. 3A.

When the first step S1 is carried out with respect to the first angle signal 9 and the second angle signal 12, the output difference 13 between the first angle signal 9 and the second angle signal 12 is calculated as shown in Fig. 3B. This difference 13 has a negative value range 13a, so that it is compensated by the second step S2 to calculate the compensation value 14 as shown in Fig. 3C. The third step then specifies the angle range of the current absolute angle on a 180° basis by corresponding it to the relational expression between the compensation value 14 and the absolute angle. The value of the absolute angle from 0° to 180° converted from the first angle signal 9 to thereby detect the actual absolute angle.

In accordance with the apparatus 1 for detecting the rotational angle, the absolute angle may be obtained from the rotation of the rotor 4 every 180°, to thereby have the absolute angle with high accuracy.

In addition, the numbers of teeth of the first transmission gear 4A, the second transmission gear 4B, the first output gear 5, and the second output gear 6 may be combined to be higher than that of the related art, so that it may be selected based on the amount of space available for placing the apparatus 1 for detecting the rotational angle or the diameter of the rotational axis member 2 of the steering wheel.

Furthermore, the gear ratio may be adjusted to have any level of detection accuracy.

The technical scope of the present invention is not limited to the above-mentioned embodiment, and various modifications may be performed within the scope of the present invention which is defined by the claims.

For example, the apparatus for detecting the rotational angle is dedicated to an automobile in accordance with the embodiment, however, is not limited to an automobile, and may be applied to a vehicle such as an electric train, a ship, or the like.

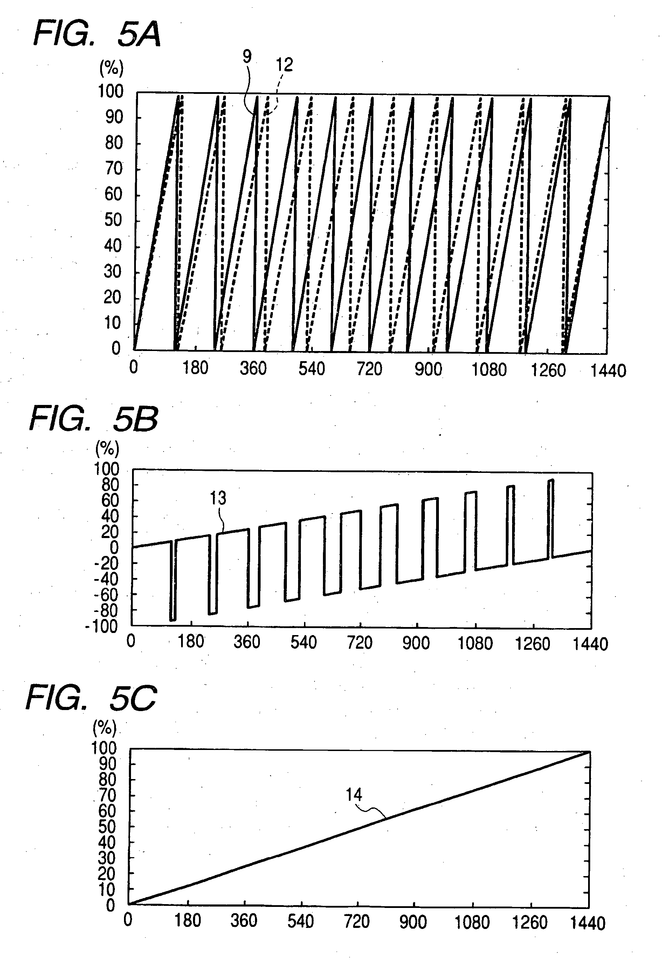

Alternatively, the gear ratio of n is two in the above mentioned embodiment, however, teeth number patterns may be obtained from the table 2 below when n becomes three. In accordance with the teeth number patterns, outputs of the first angle signal 9 and the second angle signal 12 periodically varying from 0° to 120° as shown in Fig. 5 may be obtained, so that it is possible to detect the absolute angle of the rotor from the difference 13 and the compensation 14.

Alternatively, the numbers of N, n, m are not limited to the above mentioned embodiment, and may be changed to satisfy the requirement of the rotation number and the accuracy of the steering wheel, which leads to have the same operating effect.

In addition, the number of teeth of the first output gear 5 and the second output gear 6 are the same, so that the same components may be used for both of them.

**[Table 2]**

| Teeth Pattern (gear ratio = 3) | | | |
|---|---|---|---|
| Teeth number of the first transmission gear 4A | Teeth number of the second transmission gear 4B | Teeth difference | Teeth number of the first and second output gears 5 and 6 |
| 84 | 77 | 7 | 28 |
| 72 | 66 | 6 | 24 |
| 60 | 55 | 5 | 20 |
| 48 | 44 | 4 | 16 |
| 36 | 33 | 3 | 12 |
| 24 | 22 | 2 | 8 |
| 12 | 11 | 1 | 4 |

In accordance with the apparatus and method for detecting the rotational angle of the present invention, the absolute angle of the rotor may be accurately detected, and at the same, the apparatus may readily cope with the change of the diameter of the rotational axis member of the steering wheel, the number of rotation, and detection accuracy of the rotational angle to have a high degree of design freedom.

Therefore, the body positioning in response to the steering angle of the steering wheel may be controlled with high accuracy in accordance with the apparatus for detecting the rotational angle of the present invention.

## Claims

1. An apparatus for detecting a rotational angle of a rotatable rotor (4) as an absolute angle, comprising:
a first transmission gear (4A) and a second transmission gear (4B), which are placed at the outer peripheral surface of the rotor (4) along its rotational axis;
a first output gear (5) that is rotatably teeth-engaged with the first transmission gear (4A) to output a first angle signal in response to the rotation; and
a second output gear (6) that is rotatably teeth-engaged with the second transmission gear (4B) to output a second angle signal in response to the rotation,
wherein the absolute angle of the rotor (4) is detected from the first and second angle signals
wherein the number of teeth of the first transmission gear (4A) is m times N x n where m is integer, N is a maximum rotation number of the rotor (4) and n is a gear ratio of the first transmission gear (4A) and the first output gear (5),
**characterized in that**
the first transmission gear (4A) and the second transmission gear (4B) have a different number of teeth from each other;
the number of teeth of the second transmission gear (4B) is m times (N x n - 1) with m being integer; and
the first and second output gears (5, 6) have the same number of teeth, namely N times the number of teeth difference between the first transmission gear (4A) and the second transmission gear (4B).

2. The apparatus for detecting a rotational angle of a rotatable rotor as an absolute angle according to claim 1, wherein the rotor is connected to a rotational axis of steering wheel of vehicle.

3. A method for detecting a rotational angle of a rotatable rotor (4) as an absolute angle, comprising:
a step of forming a first transmission gear (4A) and a second transmission gear (4B) at an outer peripheral surface of the rotor (4) along its rotational axis;
a step of forming a first output gear (5) that is rotatably teeth-engaged with the first transmission gear (4A) to output a first angle signal in response to the rotation, and a second output gear (6) that is rotatably teeth-engaged with the second transmission gear (4B) to output a second angle signal in response to the rotation; and
a step of detecting the absolute angle of the rotor (4) from difference between the first angle signal and the second angle signal, and at least one of the first and second angle signals,
wherein the number of the teeth of the first transmission gear (4A) is m times N x n where m is integer, N is a maximum rotation number of the rotor (4) and n is a gear ratio of the first transmission gear (4A) and the first output gear (5),
**characterized in that**
the first transmission gear (4A) and the second transmission gear (4B) have a different number of teeth from each other;
the number of teeth of the second transmission gear (4B) is m times (N x n - 1) with m being integer, and
the first and second output gears (5, 6) have the same number of teeth, namely N times the number of teeth difference between the first transmission gear (4A) and the second transmission gear (4B).

## Patentansprüche

1. Vorrichtung zum Detektieren eines Rotationswinkels eines rotierbaren Rotors (4) als ein Absolutwinkel, aufweisend;
eine erste Transmissionsverzahnung (4A) und eine zweite Transmissionsverzahnung (4B), die entlang der Rotationsachse des Rotors (4) an seiner äußeren Umfangsfläche angeordnet sind;
ein erstes Ausgangszahnrad (5), das rotierbar im Verzahnungseingriff mit der ersten Transmissionsverzahnung (4A) ist, um in Reaktion auf die Rotation ein erstes Winkelsignal auszugeben; und
ein zweites Ausgangszahnrad (6), das rotierbar im Verzahnungseingriff mit der zweiten Transmissionsverzahnung (4B) ist, um in Reaktion auf die Rotation ein zweites Winkelsignal auszugeben,
wobei aus dem ersten und dem zweiten Winkelsignal der absolute Winkel des Rotors (4) ermittelt wird;
wobei die Anzahl der Zähne der ersten Transmissionsverzahnung (4A) m mal N x n ist, wobei m eine ganze Zahl, N eine maximale Rotationszahl des Rotors (4) und n ein Übersetzungsverhältnis zwischen der ersten Transmissionsverzahnung (4A) und dem ersten Ausgangszahnrad (5) ist,
**dadurch gekennzeichnet, dass**
die erste Transmissionsverzahnung (4A) und die zweite Transmissionsverzahnung (4B) eine unterschiedliche Anzahl an Zähnen haben;
die Anzahl der Zähne der zweiten Transmissionsverzahnung (4B) m mal (N x n - 1) ist, wobei m eine ganze Zahl ist; und
das erste und das zweite Ausgangszahnrad (5, 6) die gleiche Anzahl an Zähnen haben, nämlich N mal die Differenz in der Anzahl der Zähne zwischen der ersten Transmissionsverzahnung (4A) und der zweiten Transmissionsverzahnung (4B).

2. Vorrichtung zum Detektieren eines Rotationswinkels eines rotierbaren Rotors als Absolutwinkel nach Anspruch 1, wobei der Rotor mit einer Rotationsachse eines Lenkrades eines Fahrzeugs verbunden ist.

3. Verfahren zum Detektieren eines Rotationswinkels eines rotierbaren Rotors (4) als ein Absolutwinkel, aufweisend:
einen Schritt des Ausbildens einer ersten Transmissionsverzahnung (4A) und einer zweiten Transmissionsverzahnung (4B) an einer äußeren Umfangsfläche des Rotors (4) entlang seiner Rotationsachse;
einen Schritt des Ausbildens eines ersten Ausgangszahnrades (5), das rotierbar im Verzahnungseingriff mit der ersten Transmissionsverzahnung (4A) ist, um in Reaktion auf die Rotation ein erstes Winkelsignal auszugeben; und ein zweites Ausgangszahnrad (6), das rotierbar im Verzahnungseingriff mit der zweiten Transmissionsverzahnung (4B) ist, um in Reaktion auf die Rotation ein zweites Winkelsignal auszugeben; und
einen Schritt des Ermittelns des Absolutwinkels des Rotors (4) aus der Differenz zwischen dem ersten Winkelsignal und dem zweiten Winkelsignal und wenigstens einem von dem ersten und dem zweiten Winkelsignal,
wobei die Anzahl der Zähne der ersten Transmissionsverzahnung (4A) m mal N x n ist, wobei m eine ganze Zahl, N die Anzahl maximaler
Rotationen des Rotors (4), und n das Übersetzungsverhältnis zwischen der ersten Transmissionsverzahnung (4A) und dem ersten Ausgangszahnrad (5) ist,
**dadurch gekennzeichnet, dass**
die erste Transmissionsverzahnung (4A) und die zweite Transmissionsverzahnung (4B) eine unterschiedliche Anzahl an Zähnen haben;
die Anzahl der Zähne der zweiten Transmissionsverzahnung (4B) m mal (N x n - 1) ist, wobei m eine ganze Zahl ist, und
das erste und das zweite Ausgangszahnrad (5, 6) die gleiche Anzahl an Zähnen haben, nämlich N mal die Differenz der Anzahl der Zähne zwischen der ersten Transmissionsverzahnung (4A) und der zweiten Transmissionsverzahnung (4B).

## Revendications

1. Dispositif de détection d'un angle de rotation d'un rotor orientable (4) en tant qu'angle absolu, comprenant :
un premier élément denté de transmission (4A) et un deuxième élément denté de transmission (4B), qui sont placés au niveau de la surface périphérique extérieure du rotor (4) le long de son axe de rotation ;
un premier élément denté de sortie (5) dont les dents sont en prise à rotation avec le premier élément denté de transmission (4A) pour délivrer un premier signal d'angle en réponse à la rotation ; et
un deuxième élément denté de sortie (6) dont les dents sont en prise à rotation avec le deuxième élément denté de transmission (4B) pour délivrer un deuxième signal d'angle en réponse à la rotation,
dans lequel l'angle absolu du rotor (4) est détecté à partir des premier et deuxième signaux d'angle ;
dans lequel le nombre de dents du premier élément denté de transmission (4A) est égal à m fois N x n, où m est un entier, N est un nombre de rotations maximum du rotor (4) et n est un rapport d'engrenage du premier élément denté de transmission (4A) et du premier élément denté de sortie (5),
**caractérisé en ce que** :
le premier élément denté de transmission (4A) et le deuxième élément denté de transmission (4B) ont un nombre de dents différent ;
le nombre de dents du deuxième élément denté de transmission (4B) est égale à m fois (N x n - 1), m étant un entier ; et
les premier et deuxième éléments dentés de sortie (5, 6) ont le même nombre de dents, à savoir N fois la différence du nombre de dents entre le premier élément denté de transmission (4A) et le deuxième élément denté de transmission (4B).

2. Dispositif de détection d'un angle de rotation d'un rotor orientable en tant qu'angle absolu selon la revendication 1, dans lequel le rotor est connecté à un axe de rotation du volant de direction d'un véhicule.

3. Procédé de détection d'un angle de rotation d'un rotor orientable (4) en tant qu'angle absolu, comprenant :
une étape de formation d'un premier élément denté de transmission (4A) et d'un deuxième élément denté de transmission (4B) au niveau de la surface périphérique extérieure du rotor (4) le long de son axe de rotation ;
une étape de formation d'un premier élément denté de sortie (5) dont les dents sont en prise à rotation avec le premier élément denté de transmission (4A) pour délivrer un premier signal d'angle en réponse à la rotation, et d'un deuxième élément denté de sortie (6) dont les dents sont en prise à rotation avec le deuxième élément denté de transmission (4B) pour délivrer un deuxième signal d'angle en réponse à la rotation ; et
une étape de détection de l'angle absolu du rotor (4) à partir de la différence entre le premier signal d'angle et le deuxième signal d'angle, et au moins l'un des premier et deuxième signaux d'angle,
dans lequel le nombre de dents du premier élément denté de transmission (4A) est égal à m fois N x n, où m est un entier, N est un nombre de rotations maximum du rotor (4) et n est un rapport d'engrenage du premier élément denté de transmission (4A) et du premier élément denté de sortie (5),
**caractérisé en ce que** :
le premier élément denté de transmission (4A) et le deuxième élément denté de transmission (4B) ont un nombre de dents différent ;
le nombre de dents du deuxième élément denté de transmission (4B) est égale à m fois (N x n - 1), m étant un entier ; et
les premier et deuxième éléments dentés de sortie (5, 6) ont le même nombre de dents, à savoir N fois la différence du nombre de dents entre le premier élément denté de transmission (4A) et le deuxième élément denté de transmission (4B).
